Europäisches Patentamt

European Patent Office

Office européen des brevets

(11) Publication number: **0 139 469**
**A1**

(12) # EUROPEAN PATENT APPLICATION

(21) Application number: **84306278.7**

(22) Date of filing: **13.09.84**

(51) Int. Cl.⁴: **H 04 Q 9/00**
**G 01 V 1/22**

(30) Priority: **13.09.83 GB 8324475**

(43) Date of publication of application:
**02.05.85 Bulletin 85/18**

(84) Designated Contracting States:
**AT BE CH DE FR IT LI LU NL SE**

(71) Applicant: **STANDARD TELEPHONES AND CABLES**
**PUBLIC LIMITED COMPANY**
**190 Strand**
**London, WC2R 1DU(GB)**

(71) Applicant: **BRITOIL PLC**
**150 St. Vincent Street**
**Glasgow, G2 5LJ(GB)**

(72) Inventor: **Darton, Kenneth Stanley**
**40, Latton Green**
**Harlow Essex(GB)**

(72) Inventor: **Jones, Robert Alan**
**40, Walter Avenue**
**Fyfield Essex(GB)**

(74) Representative: **Dennis, Mark Charles et al,**
**STC Patent Department Edinburgh Way**
**Harlow Essex CM20 2SH(GB)**

(54) Interchangable bus section addressing.

(57) An interchangeable bus section addressing arrangement for electronic units *1, 2, 3,* or the like which are connectable in an arbitrary sequence, wherein each unit includes a plurality of input address connectors 10, an identical plurality of output connectors 11, the input and output connectors being subdivided into corresponding groups a, b, c, d with the connectors in each input group being electrically coupled to the connectors in the corresponding output group, the number of connectors in each input group being different and likewise the number of connectors in each corresponding output group, the arrangement of the couplings between the input and output connectors of corresponding groups being such that for each group the order of the output (input) connectors is advanced by one with respect to the order of the input (output) connectors, each unit further including connection logic *12* having the same number of connections as the number of groups, said logic connections being connected one to a particular coupling in each group in identical fashion for all the units so that the units are provided with identical sections of an address bus whereby when the units are connected in sequence simultaneous selection *14* of one connection only in each group at one point in the sequence effects unique addressing of one of the units so connected.

Croydon Printing Company Ltd.

## INTERCHANGEABLE BUS SECTION ADDRESSING

This invention relates to an interchangeable bus section addressing arrangement for electronic units or the like, which are connectable in an arbitrary sequence.

A typical application of the invention is to be found in the field of marine seismic streamers, wherein a large number of substantially identical hydrophone assemblies are connected in sequence to be towed behind a ship. One problem which arises in such streamers is getting the data gathered by the hydrophone assemblies back to the processing equipment on the ship. Obviously multiplexing techniques are required (there may be several hundred hydrophones in one streamer array).

The present invention seeks to provide a means whereby electronic units, e.g. sections of a streamer array, can be uniquely addressed whilst at the same time minimising the complexity of the array hardware required to achieve such addressing. Again, obviously, it is desirable that the sections be constructed in such a way that they can be mass produced with identical address hardware so that they can be connected in an arbitrary sequence, without regard to any predetermined section identity, and yet still provide a satisfactory scheme whereby once connected the sections are uniquely addressable.

According to the present invention there is provided an interchangeable bus section addressing arrangement for electronic units or the like which are connectable in an arbitrary sequence, wherein each unit includes a plurality of input address connectors, an identical plurality of output connectors, the input and output connectors being subdivided into corresponding groups with the connectors in each input group being electrically coupled to the connectors in the corresponding output group, the number of connectors in each input group being different and likewise the number of connectors in each corresponding output group, the arrangement of the couplings between the input and output connectors of corresponding groups being such that for each group the order of the output (input) connectors is advanced by one with respect to the order of the input (output) connectors, each unit further including connection logic having the same number of connections as the number of groups, said logic connections being connected one to a particular coupling in each group in identical fashion for all the units so that the units are provided with identical sections of an address bus whereby when the units are connected in sequence simultaneous selection of one connection only in each group at one point in the sequence effects unique addressing of one of the units so connected.

Thus, in addition to the number of substantially identical units the complete assembly requires only a single, simple selection logic equipment connected to the sequence, e.g. at one end, to complete the bus addressing facility.

In order that the invention may be more readily understood and carried into effect an embodiment thereof will now be described with reference to the accompanying drawings, wherein

Fig. 1 illustrates schematically part of a seismic streamer array, and

Fig. 2 illustrates the interchangeable bus section addressing arrangement.

**0139469**

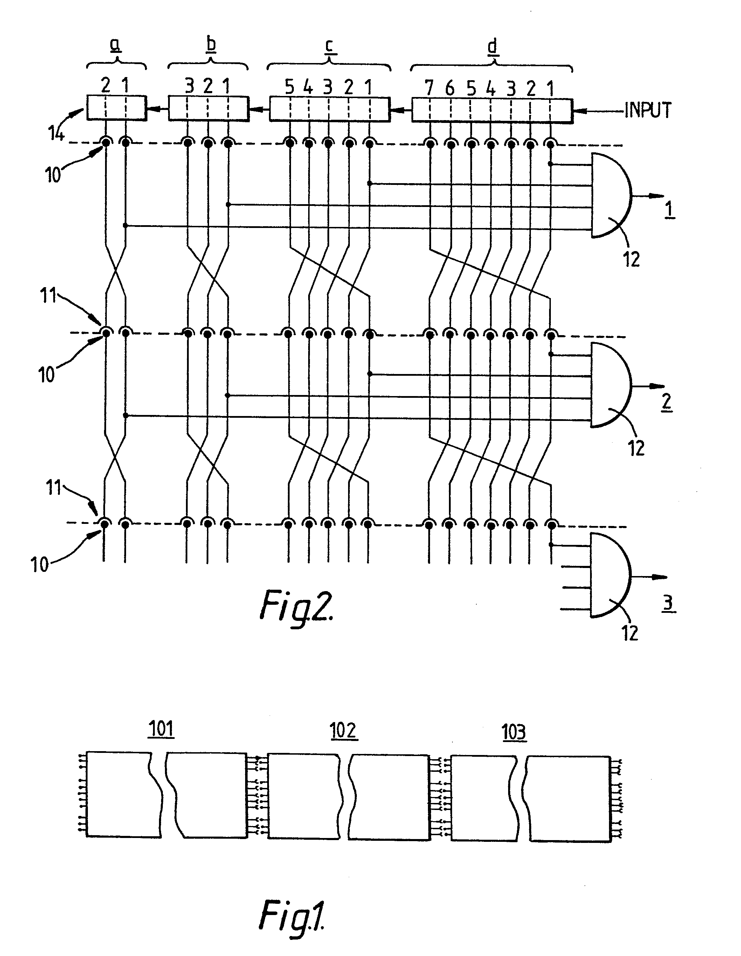

In Fig. 1 there are depicted three hydrophone assemblies 101, 102, 103, which form part of a seismic streamer array. These assemblies are substantially identical internally (although they need not be) and are encased in substantially identical housings or containers. The assemblies are provided with identical arrangements of input connectors (e.g. plugs) at one end and corresponding identical arrangements of output connectors (e.g. sockets) at the other. It is thus apparent that the assemblies can be mass produced and can be connected one with another in any order to build up a seismic streamer array. Furthermore, in the event of one section being damaged or otherwise requiring to be replaced, it can be taken out and either a new section inserted or the two sections on either side be closed up and connected together without altering the effectiveness of the addressing scheme.

Fig. 2 depicts details of the bus addressing scheme for the first sections 1, 2, 3 of a seismic streamer array. The sections are identical in their bus arrangements. Each section has a number of input plugs 10 and a number of output sockets 11. The plugs and sockets are subdivided into corresponding groups a, b, c, d of different numbers. As shown group a has two corresponding plugs 10 and sockets 11, group b has three, group c has five and group d has seven. These numbers are chosen according to the sequence of prime numbers. The plugs of each group are coupled to the sockets in the corresponding group in the section, the couplings being such that the order of the sockets is advanced by one relative to the order of the plugs. Thus, in group b for example, socket number 1 is coupled to plug member 3, socket member 2 to plug member 1 and socket member 3 to plug member 2. This re-ordering is the same for all groups and for all sections. Thus the re-ordering forms repetitive sequences, which in the case of group a are repeated every two sections, in group b are repeated every three sections, in group c every _five_ sections and in group d every seven sections. Each section has one coupling from each group, e.g. coupling number 1 in each group, connected to a respective input of an AND gate 12.

The endmost section 1 is plugged into a selection logic module 14 by means of which one coupling in each group is selectively energised simultaneously. Thus, if logic 14 is programmed to select coupling number 1 in each group, the section 1 will be addressed. If coupling numbers 2, 3, 5 and 7 in groups a, b, c and d respectively are selected, then section 2 will be addressed. To address section 3 couplings 1, 2, 4 and 6 are selected, and so on. The total number of addresses available will depend on the number of groups. The table below shows the relationship between the number of groups G, the number of couplings C needed in each section and the number of addresses available.

## TABLE

| Number in Group G | Number of couplings C | Number of Addresses A |
| --- | --- | --- |
| 2 | 2 | 2 |
| 3 | 5 | 6 |
| 5 | 10 | 30 |
| 7 | 17 | 210 |
| 11 | 28 | 2310 |
| 13 | 41 | 30030 |
| 17 | 58 | 510510 |
| 19 | 77 | 9699690 |

It will be noted that the number of couplings C is the arithmetical sum of successive groups G whilst the total number of addresses A is the arithmetical product of successive groups G. If there are more addresses than the product A allows then the address sequence will repeat.   This may be an advantageous feature in some applications.

The selection logic <u>14</u> is quite conventional gating logic readily implemented by those skilled in the art.

Whilst the invention has so far been described in the context of addressing, e.g. selectively energising sections in an array, it is equally applicable to multiplexing data from an array.   Instead of each section having an AND gate it can instead have data input logic feeding the same data to one coupling in each group.   The selection logic <u>14</u> is now operated as selective AND gating whereby selection of an address will allow data from only one section at a time to be extracted from the array.

CLAIMS:-

1.　　　An interchangeable bus section addressing arrangement for electronic units (1,2,3, Fig. 2) or the like which are connectable in an arbitrary sequence, characterised in that each unit includes a plurality of input address connectors (10, Fig. 2), an identical plurality of output connectors (11), the input and output connectors being subdivided into corresponding groups (a,b,c,d) with the connectors in each input group being electrically coupled to the connectors in the corresponding output group, the number of connectors in each input group being different and likewise the number of connectors in each corresponding output group, the arrangement of the couplings between the input and output connectors of corresponding groups being such that for each group the order of the output (input) connectors is advanced by one with respect to the order of the input (output) connectors, each unit further including connection logic (12) having the same number of connections as the number of groups, said logic connections being connected one to a particular coupling in each group in identical fashion for all the units so that the units are provided with identical sections of an address bus whereby when the units are connected in sequence simultaneous selection of one connection only in each group at one point in the sequence effects unique addressing of one of the units so connected.

2.　　　An arrangement according to claim 1 characterised in that the numbers in each group are chosen according to the sequence of prime numbers.

3.　　　An arrangement according to claim 1 or 2 characterised in that the connection logic is AND gating the inputs of which are connected to the respective group couplings.

4.　　　An arrangement according to claim 1 or 2 characterised in that the connection logic is data input logic for feeding the same data to one coupling in each group.

- 7 -                                    0139469

5.    A seismic streamer unit including an addressing arrangement as claimed in any preceding claim.

6.    A seismic streamer array including a plurality of units connected in sequence each unit incorporating an addressing bus arrangement as claimed in any preceding claim and a selection logic adapted to select one coupling in each group simultaneously whereby a selected unit is uniquely addressed.

7.    A seismic streamer array including a plurality of units connected in sequence, the array including means of addressing individual units characterised by ordering of input and output connector plug and socket combinations in such a way that interchanging of units preserves the identity of the position in the sequence corresponding to each address regardless of which unit is connected in each position in the sequence.

*Fig.2.*

*Fig.1.*

**European Patent Office**

**EUROPEAN SEARCH REPORT**

**0139469**
Application number

EP 84 30 6278

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-4 253 087 (SAAL) *Column 4, line 25 - column 8, line 23; figures 4-6* | 1-4 | H 04 Q 9/00 G 01 V 1/22 |
| Y |  | 5-7 | |
|  | --- | | |
| Y | GB-A-2 103 797 (INSTITUT FRANCAIS DU PETROLE) *The whole document* | 5-7 | |
|  | --- | | |
| Y | FR-A-2 144 598 (COMPAGNIE GENERALE DE GEOPHYSIQUE) *The whole document* | 5-7 | |
|  | ----- | | |

|  |
|---|
| **TECHNICAL FIELDS SEARCHED (Int. Cl.4)** |
| H 04 Q G 01 V |

The present search report has been drawn up for all claims

| Place of search | Date of completion of the search | Examiner |
|---|---|---|
| THE HAGUE | 22-11-1984 | WANZEELE R.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82